(19) Europäisches Patentamt / European Patent Office / Office européen des brevets

(11) **EP 1 900 870 A1**

(12) **EUROPEAN PATENT APPLICATION**
published in accordance with Art. 153(4) EPC

(43) Date of publication:
**19.03.2008 Bulletin 2008/12**

(51) Int Cl.:
***D06N 3/14*** *(2006.01)*

(21) Application number: **06766691.7**

(22) Date of filing: **14.06.2006**

(86) International application number:
**PCT/JP2006/311922**

(87) International publication number:
**WO 2006/134965 (21.12.2006 Gazette 2006/51)**

(84) Designated Contracting States:
**DE FR GB IT**

(30) Priority: **17.06.2005 JP 2005178197**

(71) Applicant: **KURARAY CO., LTD.**
**Kurashiki-shi, Okayama 710-8622 (JP)**

(72) Inventors:
• **YOSHIDA, Yasuhiro,**
**Kuraray Co., Ltd.**
**Okayama-shi, Okayama 702-8601 (JP)**

• **MEGURO, Masasi,**
**Kuraray Co., Ltd.**
**Okayama-shi, Okayama 702-8601 (JP)**
• **YONEDA, Hisao,**
**Kuraray Co., Ltd.**
**Okayama-shi, Okayama 702-8601 (JP)**
• **YAMASAKI, Tsuyoshi,**
**Kuraray Co., Ltd.**
**Okayama-shi, Okayama 702-8601 (JP)**

(74) Representative: **Vossius & Partner**
**Siebertstrasse 4**
**81675 München (DE)**

(54) **PILED SHEET AND PROCESS FOR PRODUCING THE SAME**

(57)    A raised sheet composed of three layers which are united by entanglement. The three layers are united in a layered structure of entangled nonwoven fabric A made of microfine fibers/polyurethane sheet B/woven or knitted fabric C or a layered structure of entangled nonwoven fabric A made of microfine fibers/woven or knitted fabric C/polyurethane sheet B. On the surface of the entangled nonwoven fabric A, raised naps of the microfine fibers are formed. A part of the microfine fibers constituting the entangled nonwoven fabric A penetrates through the polyurethane sheet B and the woven or knitted fabric C in this order, or penetrates through the woven or knitted fabric C and the polyurethane sheet B in this order. At least a part of the penetrated microfine fibers bonds to polyurethane which constitutes the polyurethane sheet B. The raised sheet is excellent in the shape stability, for example, it does not lose its shape even after a long term use. In addition, the raised sheet has a good surface abrasion resistance and a soft and high-quality hand.

**Description**

TECHNICAL FIELD

The present invention relates to a raised sheet with little loss of shape even after a long term use having a good surface abrasion resistance and a soft hand, which is suitably used as the covering fabric for vehicle seats and interior furniture such as cushion sheet, sofa and chair.

BACKGROUND ART

Artificial leathers have been used in various applications such as interior, clothes, shoes, bags, gloves, and covering fabrics for vehicle seats. Particularly in the field of the covering fabric for vehicle seats such as railroad vehicle seat, automotive seat, airplane seat and ship and the covering fabric for interior furniture such as cushion sheet and sofa chair, artificial leathers which combine a good surface abrasion resistance and a high shape stability resistant to elongation, loss of elasticity and wrinkling even after a long term have been keenly required.
Recently, artificial leathers having a substrate made of a nonwoven fabric, particularly, artificial leathers having a substrate made of a nonwoven fabric of microfine fibers have been used as high-quality materials in various applications. However, the artificial leathers having a substrate which is made only of a nonwoven fabric of microfine fibers have a problem of easy deformation. For example, a covering fabric of chair is likely strained by person's weight which is loaded thereon repeatedly for a long period of time. To prevent the strain, it has been generally known to laminate a woven or knitted fabric onto a back surface of artificial leathers. However, although the deformation is effectively prevented, the hand becomes hard and the sewing is difficult because of wrinkling in case of complicated design. An artificial leather having a substrate made of an entangled body which is composed of a nonwoven fabric of microfine fibers and a hard twist woven or knitted fabric is known (for example, Patent Document 1). This artificial leather has a soft hand as compared with an artificial leather having a woven or knitted fabric on its back surface, and has a high shape stability as compared with an artificial leather having no woven or knitted fabric. However, the entangled body having only a woven or knitted fabric united is poor in the recovery from elongation and causes strain on the portion repeatedly subjected to person's weight after use for several years. In addition, the surface abrasion resistance cannot be improved only by laminating a woven or knitted fabric.
To improve the elasticity, proposed are a nonwoven fabric produced by laminating a short fiber web and a fleece made of elastic long fibers of polyurethane, and a nonwoven fabric composed of an elastic nonwoven fabric made of elastomer and short fiber webs laminated on both surfaces of the elastic nonwoven fabric in which the fibers in the short fiber webs on both the surfaces penetrate through the interposed nonwoven fabric layer and the fibers in the short fiber webs on both the surfaces bond to one another by adhesive or heat fusion (Patent Documents 2 and 3). The sheets obtained from these nonwoven fabrics are surely improved in the elasticity. However, if used in an application, such as a covering fabric for chair, which is repeatedly subjected to person's weight for a long period of time, the proposed sheet is easily permanently stretched and does not fit for practical use because of the lack of structure for preventing excessive elongation which is possessed by a woven fabric. Therefore, the sheets hitherto proposed are not sufficient in the shape stability and surface abrasion resistance during a long term use.
[Patent Document 1] JP 4-1113B
[Patent Document 2] JP 4-257363A
[Patent Document 3] JP 7-70902A

DISCLOSURE OF THE INVENTION

An object of the present invention is to provide a raised sheet for artificial leathers having a good shape stability of preventing the loss of shape even after a long term use, a good surface abrasion resistance and a good hand excellent in softness and high quality, which is suitably used in the production of a covering fabric for vehicle seats and interior furniture such as cushion sheet, sofa and chair.
As a result of extensive researches, the inventors have found a raised sheet achieving the above object and accomplished the invention.
Thus, the present invention relates to a raised sheet composed of three layers which are united by entanglement, the raised sheet satisfying the following requirements:

(1) three layers are united in a layered structure of entangled nonwoven fabric A made of microfine fibers/polyurethane sheet B/woven or knitted fabric C or a layered structure of entangled nonwoven fabric A made of microfine fibers/woven or knitted fabric C/polyurethane sheet B;

(2) the entangled nonwoven fabric A has raised microfine fibers on its surface;

(3) a part of the microfine constituting the entangled nonwoven fabric A penetrate through the polyurethane sheet B and the woven or knitted fabric C in this order, or penetrate through the woven or knitted fabric C and the polyurethane sheet B in this order; and

(4) at least a part of the penetrated microfine fibers bonds to polyurethane which constitutes the polyurethane sheet B.

The present invention further relates to a method of producing a raised sheet, which includes:

(1) a step of superposing a fiber web A' made of microfine fiber-forming fibers, a polyurethane sheet B and a woven or knitted fabric C, thereby obtaining a superposed body having a layered structure of fiber web A/polyurethane sheet B/woven or a layered structure of knitted fabric C or fiber web A/woven or knitted fabric C/polyurethane sheet B;

(2) a step of entangling the superposed body such that at least a part of the microfine fiber-forming fibers penetrates through the polyurethane sheet B and the woven or knitted fabric C, thereby converting the fiber web A' to an entangled nonwoven fabric A" to unite the superposed body;

(3) a step of converting the microfine fiber-forming fibers to microfine fibers, thereby converting the entangled nonwoven fabric A" to an entangled nonwoven fabric A; and

(4) a step of bonding at least a part of the microfine fibers penetrating through the polyurethane sheet B to polyurethane which constitutes the polyurethane sheet B by heat treatment, and then, forming raised microfine fibers on a surface of the entangled nonwoven fabric A; or

(5) a step of forming raised microfine fibers on a surface of the entangled nonwoven fabric A, and then, bonding at least a part of the microfine fibers penetrating through the polyurethane sheet B to polyurethane which constitutes the polyurethane sheet B by heat treatment.

BEST MODE FOR CARRYING OUT THE INVENTION

The fibers mainly composed of microfine fibers of 0.5 dtex or less are preferably used for the entangled nonwoven fabric A which forms at least one layer of the raised sheet of the invention, because the resultant raised sheet has a natural leather-like hand, although not particularly limited thereto. The microfine fibers may be those directly produced by spinning a single kind of polymer or those obtained by converting microfine fiber-forming composite fibers (also simply referred to as microfine fiber-forming fibers) which are produced from at least two kinds of polymers. The microfine fiber-forming fibers may include, for example, extraction-type composite fibers which are capable of forming fibrillates of the island component by the dissolution or decomposition of the sea component and division-type composite fibers which are capable of being fibrillated to microfine fibers of each polymer component by a mechanical/physical method or a chemical method using a treating agent.

The polymer for microfine fibers is at least one kind of polymer sparingly soluble in water which is selected from melt-spinnable polyamides such as 6-nylon, 66-nylon and 12-nylon, and melt-spinnable polyesters such as polyethylene terephthalate, polytrimethylene terephthalate, polybutylene terephthalate and their copolymers. The component to be removed by extraction or decomposition of the extraction-type composite fibers is a water-soluble polymer which is different from the microfine fiber-forming component in the solubility and decomposability, which is less compatible with the microfine fiber-forming component, and which has a melt viscosity or surface tension smaller than those of the microfine fiber-forming component under the spinning conditions. Taking the prevention of environmental pollution and the shrinking properties upon dissolution into consideration, a heat-melting, hot water-soluble polyvinyl alcohol is preferably used as the component to be removed by extraction or decomposition. The microfine fibers may be spinning-colored with an inorganic pigment such as carbon black and titanium oxide or an organic pigment or may be added with a known additive for fibers, in an not adversely affecting the effect of the invention.

The heat-melting, hot water polyvinyl alcohol (PVA) is produced by saponifying a resin mainly constituted by vinyl ester units. Examples of vinyl monomers for the vinyl ester units include vinyl formate, vinyl acetate, vinyl propionate, vinyl valerate, vinyl caprate, vinyl laurate, vinyl stearate, vinyl benzoate, vinyl pivalate and vinyl versatate, with vinyl acetate being preferred in view of easiness of production of PVA.

PVA may be homo PVA or modified PVA introduced with co-monomer units, with the modified PVA being preferred in view of a good melt spinnability, water solubility and fiber properties. In view of a good copolymerizability, melt spinnabihty and water solubility, preferred examples of the co-monomers are $\alpha$-olefins having 4 or less carbon atoms such as ethylene, propylene, 1-butene and isobutene; and vinyl ethers such as methyl vinyl ether, ethyl vinyl ether, n-propyl vinyl ether, isopropyl vinyl ether and n-butyl vinyl ether. The content of the comonomer units in PVA is preferably 1 to 2 mol %, more preferably 4 to 15 mol %, and still more preferably 6 to 13 mol % base on the total constitutional units in the modified PVA. Particularly preferred is ethylene-modified PVA, because the fiber properties are enhanced when the comonomer unit is ethylene. The content of the ethylene units is preferably 4 to 15 mol % and more preferably 6 to 13 mol %.

PVA can be produced by a known method such as bulk polymerization, solution polymerization, suspension polymerization, and emulsion polymerization. Generally, a bulk polymerization or solution polymerization in the absence or presence of a solvent such as alcohol is employed. Examples of the solution for the solution polymerization include lower alcohols such as methyl alcohol, ethyl alcohol and propyl alcohol. The copolymerization is performed in the presence of a known initiator, for example, an azo initiator or peroxide initiator such as a,a'-azobisisobutyronitrile, 2,2'-azobis(2,4-dimethyl-varelonitrile), benzoyl peroxide, and n-propyl peroxycarbonate. The polymerization temperature is not critical and 0 to 150 °C is recommended.

The viscosity average polymerization degree of PVA is preferably 200 to 500, more preferably 230 to 470, and still more preferably 250 to 450. The polymerization degree (P) is measured according to JIS-K6726, in which a PVA-based resin is re-saponified and purified, and then, an intrinsic viscosity [η] is measured in water at 30 °C. The polymerization degree (P) is calculated from the following equation:

$$P = ([η] \ 10^3/8.29)^{(1/0.62)}.$$

The saponification degree of the PVA is preferably 90 to 99.99 mol %, more preferably 93 to 99.98 mol %, still more preferably 94 to 99.97 mol %, and particularly preferably 96 to 99.96 mol %. The melting point of PVA (Tm) is preferably 160 to 230 °C, more preferably 170 to 227 °C, still more preferably 175 to 224 °C, and particularly preferably 180 to 220 °C. Using DSC (TA3000 manufactured by Mettler Co. Ltd.), the sample was heated to 300 °C at a temperature rising rate of 10 °C/min in nitrogen atmosphere, cooled to room temperature, and then, heated again to 300 °C at a temperature rising rate of 10 °C/min. The peak top temperature of the obtained endothermic curve is taken as the melting point.

After spinning, the microfine fiber-forming fibers are cut to staples of 20 to 120 mm long having a fineness of 1 to 15 dtex, optionally after drawing, heat treatment and mechanical crimping. The staples are carded and then made into the fiber web A' by a webber. Alternatively, the fiber web A' may be made directly form long fibers simultaneously with the spinning thereof by a spun bond method without mechanically drawing so much. After superposing in a desired weight and thickness, the fiber web A' is used in the production of the raised sheet optionally after a pre-entangling treatment by a known method such as needle punching and water jet.

The mass per unit area of the fiber web A' is selected according to the mass per unit area of the aimed raised sheet, and preferably 80 to 2000 g/m², more preferably 100 to 1500 g/m². To make the entanglement with the woven or knitted fabric C easy, the fiber web A' may be needle-punched in a punching density of 20 to 100 punch/cm², before superposing on the woven or knitted fabric C. The punching density referred to herein is a total number of felt needles which are punched to a web per unit area during a needle punching treatment. For example, when a needle board having felt needles in a density of 10/cm² is punched 50 times, the punching density is 500 punch/cm².

In view of obtaining the surface abrasion resistance, it is important that a part of the microfine fibers of the entangled nonwoven fabric A penetrates through the polyurethane sheet B and bonds to the polyurethane. To attain this, the polyurethane is preferably present in the polyurethane sheet B in a highly continuous state along the direction parallel to its surface, namely, in a film state. To allow the microfine fibers constituting the entangled nonwoven fabric A to penetrate through the polyurethane sheet B and the woven or knitted fabric C, the polyurethane sheet B is preferably a nonwoven fabric. Such a polyurethane nonwoven fabric is obtained, for example, by a melt blown method described below.

Polyurethane is preferably a thermoplastic polyurethane which is produced from a polymer diol, an organic diisocyanate and an optional chain extender each in a desired proportion by a melt polymerization, a bulk polymerization or a solution polymerization. Examples of the polymer diol include a polyester diol having an average molecular weight of 600 to 3000 which is produced by the reaction between at least one diol component selected from a straight-chain aliphatic diol, a branched aliphatic diol or alicyclic aliphatic diol each having 2 to 12 carbon atoms such as ethylene glycol, propanediol, 1,4-butanediol, 1,5-pentanediol, 3-methyl-1,5-pentanediol, neopentyl glycol and 1,6-hexanediol, and at least one dicarboxylic acid component selected from an aliphatic carboxylic acid such as succinic acid, glutaric acid, adipic acid and their carboxylic esters. The organic diisocyanate is mainly selected from an organic or alicyclic diisocyanate such as phenylene diisocyanate, tolylene diisocyanate and 4,4'-diphenylmethane diisocyanate.

An organic diisocyanate selected from an aliphatic diisocyanate or a diisocyanate having a naphthalene ring may be partly used, if necessary. The chain extender may be selected from a low molecular compound having two active hydrogen atoms such as diol, aminoalcohol, hydrazine and diamine.

The polyurethane is not limited to the polyester polyurethane described above, and a polyether polyurethane, a polycarbonate polyurethane, a copolymer polyurethane and their mixture may be used according to the kind of aimed polyurethane.

To obtain a nonwoven fabric excellent in the uniformity, a thermoplastic polyurethane which has a polymer diol for constituting the soft segment in an amount of 45 to 75% by mass is preferably used. Also preferred is a polyurethane produced by the polymerization in the presence of a chain extender mainly composed of a compound selected from a low molecular aliphatic diol and isophoronediamine. The polymerization degree of polyurethane is preferably controlled such that the intrinsic viscosity [η] is 0.5 to 1.5 dl/g when measured in DMF. The content of the soft segment in polyurethane is preferably 45% by mass or more, because the spinnability of molten polymer is good, the conversion to microfine fibers is easy, and the flexibility, elasticity, shape stability and surface smoothness of the polyurethane sheet B are good. To prevent the spinnability from being lowered and the conversion to microfine fibers from being difficult, the content of the soft segment is preferably 75% by mass or less. If the intrinsic viscosity [η] is 0.5 dl/g or more, the spinnability is good and the conversion to microfine fibers is easy If being 1.5 dl/g or less, the melt viscosity is moderate and the fiber flow is good. The polyurethane may be added with an additive such as antiblocking agent, stabilizer, colorant and antistatic agent in a suitable amount.

The softening temperature of polyurethane is preferably 100 to 220 °C. The softening temperature is defined as the end point of a rubbery flat region in a curve showing the temperature dependency of the storage elastic modulus, which is obtained by a tensile dynamic viscoelastic measurement (frequency: 11 Hz). The softening temperature is largely dependent particularly upon the molecular weight of polyurethane and the kinds and proportions of the organic diisocyanate (hard segment) and chain extender. Therefore it is preferred to select the molecular weight and the hard segment so as to regulate the softening temperature of polyurethane within the above range, while taking the easiness of forming the polyurethane sheet B, aimed properties and the adhesiveness with the microfine fibers in the production of the raised sheet into consideration.

In the production of the nonwoven fabric for the above polyurethane by a melt blow method, the spinning temperature is selected from 220 to 280 °C such the melt viscosity of polyurethane is 500 P or less, and the amount of blowing air is controlled so as to obtain a desired mass per unit area.

The mass per unit area of the polyurethane sheet B is preferably 10 to 150 $g/m^2$. If being 10 $g/m^2$ or more, a sufficient elasticity is obtained and the surface abrasion resistance is good. If being 150 $g/m^2$ or less, an excessively large weight of the total raised sheet and a rubbery hand can be avoided.

The woven or knitted structure of the woven or knitted fabric C is not critical in the invention. The fibers for the woven or knitted fabric C may be selected from fibers of a known polymer as long as the raised sheet having a strength which fits for practical use in the intended application is obtained. In view of the balance between the hand and properties of the woven or knitted fabric which depends upon the count of yarns, multifilament yarns are preferably used, although monofilament yarns and spun yarns are also usable. If the woven or knitted fabric is made from multifilament yarns composed of bundles of fibers, it is preferred to twist or size the yarns so as to prevent the filament from being disbundled. The number of twist is preferably about 10 to 900 turn/m in view of the hand of the resultant raised sheet, although not limited thereto. The count of yarns is preferably 30 to 200 dtex, although suitably changed according to the intended use. If being 200 dtex or less, the hand of the resultant raised sheet is soft and the thickness can be reduced. If being 30 dtex or more, a necessary strength is obtained even when the number of weaving is small, and the fiber web A' and the woven or knitted fabric C are sufficiently united by a needle punching or a hydroentanglement. The number of filaments in a single multifilament yarn is preferably 6 to 100. Although the yarns become soft as the number of filament increases, the properties thereof are reduced and the yarns become easily damaged in the step of fixing the penetrated fibers described below. Therefore, the number of filament is preferably selected from the above range according to the balance between the intended hand and properties. If the microfine fiber-forming mentioned above are uses as the filament for the multifilament yarns, the number of filament can be increased by the conversion to microfine fibers in a stage after the penetrating step. By conducting the penetrating step so as to prevent the damage of yarns as much as possible, the raised sheet having a good hand can be obtained. The mass per unit area of the woven or knitted fabric C is preferably 30 to 200 $g/m^2$ in view of the hand of the resultant raised sheet. If being 30 $g/m^2$ or more, the woven or knitted fabric acquires a sufficient strength the loss of shape due to slippage of yarns is prevented. If being 200 $g/m^2$ or less, the resultant raised sheet has a soft hand and the woven or knitted fabric C and the fiber web A' are firmly united.

The order of superposing the entangled nonwoven fabric A, the polyurethane sheet B and the woven or knitted fabric C in the raised sheet is not critical, and may be superposed in the order of entangled nonwoven fabric A/polyurethane sheet B/woven or knitted fabric C or entangled nonwoven fabric A/woven or knitted fabric C/polyurethane sheet B. To improve the appearance and hand of the back surface (surface opposite to the entangled nonwoven fabric A) or regulating the thickness or mass per unit area of the raised sheet, the entangled nonwoven fabric D may be disposed on the back surface to obtain a layered structure of entangled nonwoven fabric A/polyurethane sheet B/woven or knitted fabric C/ entangled nonwoven fabric D or a layered structure of entangled nonwoven fabric A/woven or knitted fabric C/polyurethane sheet B/entangled nonwoven fabric D. When the raised sheet has the above layered structure and a part of the microfine fibers constituting the entangled nonwoven fabric A penetrates through the polyurethane sheet B and the woven or knitted fabric C thereby to be entangled with the fibers constituting the entangled nonwoven fabric D, each layer is united firmly and the raised sheet has good hand, touch and properties on its both surfaces. Alternatively, a part of the fibers constituting the entangled nonwoven fabric D may be allowed to penetrate through the polyurethane sheet and the woven or knitted fabric C so as to be entangled with the microfine fibers constituting the entangled nonwoven fabric A.

The kind and fineness of the fibers for constituting the entangled nonwoven fabric D the mass per unit area of the entangled nonwoven fabric D may be selected from the polymer and ranges which are described above with respect to the entangled nonwoven fabric A. The kind and fineness of fibers the mass per unit area may be the same or different between the entangled nonwoven fabric D and the entangled nonwoven fabric A.

The method of uniting the fiber web A', the polyurethane sheet B and the woven or knitted fabric C is not particularly limited. When the fiber web A' having a large mass per unit area is used, a needle punching is preferably employed because the microfine fiber-forming fibers in the fiber web A' are effectively entangled and the three layers are united simultaneously. The punching density is preferably 300 to 4000 punch/cm$^2$ and more preferably 500 to 3500 punch/cm$^2$. If being 300 punch/cm$^2$ or more, the three layers are firmly united. If being 4000 punch/cm$^2$ or less, the fibers in the fiber web A' and the woven or knitted fabric C are little damaged to prevent the reduction of properties. The punching depth is set such that at least a part of the fibers in the fiber web A' penetrates through the polyurethane sheet B and the woven or knitted fabric C so as to enhance the surface abrasion resistance of the resultant raised sheet. Namely, when punching from the side of the fiber web A', the punching depth is set so as to allow the barbs of needles to pass through the polyurethane sheet B and the woven or knitted fabric C. When the fibers constituting the woven or knitted fabric C are extremely thick as compared with the microfine fibers which finally constitute the entangled nonwoven fabric A, or when the color and dyeability of the fibers constituting the woven or knitted fabric C are different from those of the microfine fibers, it is preferred to prevent the fibers of the woven or knitted fabric C from being exposed to the surface. Therefore, when punching from the side of the polyurethane sheet B or the side of the woven or knitted fabric C, the punching depth is set such that the barb nearest to the tip of needle does not project from the surface of the web A. However, such may be not necessarily applied, if the fineness of the fibers constituting the woven or knitted fabric C is the same or smaller than that of the microfine fibers or if the appearance as color dyeability is not disharmonious. Also, in the production of the raised sheet having the entangled nonwoven fabric D, the punching depth is set such that the fibers constituting the woven or knitted fabric C are not exposed to the surface of the entangled nonwoven fabric D, if the appearance is likely to become disharmonious.

By the above needle punching, the microfine fiber-forming fibers are sufficiently entangled to convert the fiber web A' to the entangled nonwoven fabric A" and simultaneously the three or four layers are united by the entanglement. Optionally after adjusting the apparent density to 0.2 to 0.7 g/cm$^3$ and the thickness to 0.6 to 4 mm by heat-pressing the entangled body, an elastic polymer is provided at least to the interstices between the entangled microfine fiber-forming fibers in the entangled nonwoven fabric A". By providing the elastic polymer, a hand and dense feeling like natural leathers are obtained and the mechanical properties are further enhanced. The elastic polymer is preferably the polyurethane mentioned above in view of a hand and dense feeling.

The elastic polymer is provided by impregnating or applying its solution, dispersion or hot melt. However, the use of a solution containing a solvent which dissolves the polyurethane constituting the polyurethane sheet B much more than needed or the use of a hot melt which melts the polyurethane much more than needed is not recommended. If the polyurethane is used as the elastic polymer, a 3 to 40% by mass aqueous emulsion prepared by dispersing the polyurethane to a non-solvent for the polyurethane, i.e., a liquid mainly composed of water, is preferably used. The elastic polymer provided is coagulated by a wet method such as a hot water treatment at 70 to 100 °C and a steam treatment at 10 to 200 °C or a dry method such as a heat treatment in a dryer at 50 to 200 °C, preferably by the dry method.

The elastic polymer may be added, if necessary, with an additive such as a colorant, for example, carbon black and pigment, a thickening agent, an antioxidant and a dispersing agent. If the polyurethane is used as the elastic polymer, the amount to be provided is preferably 5 to 50% by mass, more preferably 10 to 40% by mass (solid basis) of the entangled nonwoven fabric before the conversion to microfine fibers, i.e., the entangled nonwoven fabric A, in view of the soft hand and elasticity of the raised sheet. Within the above range, the elastic polymer forms a dense spongy structure (Porous structure) to give a soft hand. In addition, the effect of preventing the loss of shape by the woven or knitted fabric C is enhanced.

If the fiber web A' is made of the microfine fiber-forming composite fibers, the composite fibers are converted to microfine fibers or bundles of microfine fibers by removing at least one of the polymer components (for example, sea component) by the treatment with a solvent or decomposer or by a mechanical or chemical treatment, thereby converting the entangled nonwoven fabric A" to the entangled nonwoven fabric A. If the sea-island composite fibers having PVA described above as the sea component are used, the sea component PVA is removed by dissolution by immersing the entangled body in a water bath of 80 to 95 °C for 5 to 120 min, thereby converting the composite fibers to the microfine fibers or bundles of microfine fibers. The average fiber fineness of the microfine fibers is preferably 0.0003 to 0.5 dtex, preferably 0.005 to 0.35 dtex, and still more preferably 0.01 to 0.2 dtex. The fineness of the bundles of microfine fibers is preferably 0.25 to 5 dtex, and 4 to 10000 microfine fibers are contained in a single bundle.

The conversion of the microfine fiber-forming fibers may be conducted before the elastic polymer is provided.

However, if the elastic polymer is provided the conversion to the bundles of microfine fibers, the elastic polymer bonds to the microfine fibers to likely make the hand hard. Therefore, the conversion to the bundles of microfine fibers is preferably conducted after providing the elastic polymer. In case of conducting the conversion to the bundles of microfine fibers before providing the elastic polymer, it is preferred to temporarily provide the entangled nonwoven fabric with a filler such as polyvinyl alcohol which is removable by dissolution so as to prevent the microfine fibers and the elastic polymer from bonding to each other. Thereafter, the elastic polymer is provided and then the filler is removed.

To enhance and adjust the hand, dense feeling and mechanical properties including the surface abrasion resistance of the raised sheet, a small amount of the elastic polymer may be provided, if necessary, at any stage after the conversion to the bundles of microfine fibers, i.e., at a stage after the conversion to microfine fibers, at a stage after the raising treatment, at a stage after the dyeing treatment, etc. However, the amount of the elastic polymer to be provided at such stages should be controlled to a minimum amount for obtaining the intended hand and properties, for example, should be controlled to about 10% or less of the mass per unit area of the entangled nonwoven fabric A, because the elastic polymer bonds to the microfine fibers as described above.

To improve the surface abrasion resistance of the raised sheet, at least a part of the microfine fibers of the entangled nonwoven fabric A which penetrate through the polyurethane sheet B is bonded and fixed to the polyurethane by heat-treating the polyurethane sheet B at any stage after the conversion to the microfine fibers (step of fixing the penetrated fibers). The heating treatment may be conducted by any method as long as the polyurethane can be heated to a temperature at which the polyurethane is plasticized and capable of bonding to the microfine fibers of the entangled nonwoven fabric A, i.e., the heat softening temperature of the polyurethane or higher. The heat treatment may be conducted by using a tenter or net hot-air dryer or a far-infrared dryer, although not limited thereto. During the heat treatment, the sheet may be compressed by a press roll. The compression is preferably conducted because the heat-treating temperature can be set lower than not compressed. The heating treatment may be conducted at once in a single step or separately in several steps. The heat treatment is preferably conducted at the heat softening temperature of the polyurethane or higher, fore example, at 120 to 200 °C for 20 s to 20 min, although depending upon the mass per unit area, thickness and density of the resultant raised sheet and the mass per unit area of the polyurethane sheet B. If the entangled nonwoven fabric A is made of the microfine fibers which are directly spun, it is preferred to pre-heat the fiber web A', the polyurethane sheet B and the woven or knitted fabric C after the entanglement to a united body, because the surface abrasion resistance of the raised sheet is further improved. In case of providing the bask surface with the entangled nonwoven fabric D as describe above, a part of the fibers constituting the entangled nonwoven fabric D may be allowed to penetrate through the polyurethane sheet B and woven or knitted fabric C, and at least a part of the penetrated fibers may be fixed to the polyurethane in the manner described above.

The sheet thus produced is then sliced or buffed so as to have a desired thickness. Thereafter, the surface of the entangled nonwoven fabric A is buffed by a known method using a sand paper or a card clothing, thereby forming a surface having raised microfine fibers. After optionally conducting a post-treatment such as dyeing, the raised sheet having a desired appearance and hand is obtained.

The thickness of the raised sheet thus obtained is, although depending upon its final use, preferably 0.4 to 3 for use as the covering fabric of chairs. The apparent density is preferably 0.1 to 0.8 g/cm$^3$, because a good dense feeling, drapeability and mechanical properties are obtained. The mass per unit area is preferably 100 to 1500 g/m$^2$. The thickness of each layer in the raised sheet is preferably 0.3 to 2.5 mm for the entangled nonwoven fabric A, preferably 0.03 to 0.2 mm for the polyurethane sheet B, preferably 0.05 to 0.2 mm for the woven or knitted fabric C, and preferably 0.2 to 1.0 mm for the entangled nonwoven fabric D.

The raised sheet has a constant load elongation of 10% or less in both MD and TD and a residual strain of 3% or less in both MD and TD, when measured in the methods described below. Within the above ranges, the raised sheet exhibits a good shape stability.

EXAMPLES

The present invention will be described in more detail with reference to the examples. However, it should be noted that the scope of the present invention is not limited thereto. The "part(s)" and "%" used in the examples to indicate the amounts and ratios are based on the unless otherwise noted. The measuring methods are described below.

(1) Constant load elongation and residual strain

The measurement was according to JASO M 403-88 6.5 (Test Method for Automotive Seat-Trim Fabrics) by Society of Automotive Engineers of Japan, Inc.
Three test pieces (width: 80 mm, length: 250 mm) were cut out of a raised sheet along each of the machine direction and the transverse direction. Two gage marks perpendicular to the machine direction were drawn at the central portion of each test pieces at a distance of 100 mm. Then, the test piece was clipped onto an upper grip of Martens fatigue tester at its lengthwise end and held vertically. The lower end of the test piece was clipped onto a lower grip at a clip distance of 150 mm. A load of 98.1 N (10 kgf) inclusive of the lower grip was put on the lower end of the test piece. After 10 min, the distance between gage marks (mm) was measured and the load was removed. The test piece was placed on a flat stand and the distance between gage marks was measured after 10 min from the removal of load. The constant load elongation (%) and residual strain (%) were calculated from the following equations:

$$\text{Constant load elongation (\%)} = (L_1 - L_0)/L_0 \times 100$$

$$\text{Residual strain (\%)} = (L_2 - L_0)/L_0 \times 100$$

wherein $L_0$ is the distance (mm) between gage marks before the test, $L_1$ is the distance (mm) between gage marks after 10 min of the loading, and $L_2$ is the distance (mm) between gage marks after 10 in from the removal of load.

The result is expressed by an average of three calculated values for each of the machine direction and transverse direction of the raised sheet.

The covering fabric for chair shows a better shape stability in long term use, if the constant load elongation and residual strain are smaller.

(2) Surface abrasion resistance

The abrasion loss was measured according to Martindale abrasion test of JIS L1096 under a load of 12 kPa and the number of abrasion of 5000 times.

PRODUCTION EXAMPLE 1

Production of polyurethane sheet B

Into a screw kneading polymerizer, poly-3-methyl-1,5-pentyl adipate glycol having an average molecular weight of 1150, polyethylene glycol having an average molecular weight of 2000, 4,4'-diphenylmethane diisocyanate, and 1,4-butanediol were charged in a molar ratio of 0.9:0.1:4:3 (4.63% of theoretical amount of nitrogen when calculated based on the amount of isocyanate group), and then the melt polymerization was allowed to proceed to produce polyurethane. The heat softening point of polyurethane was 125 °C. The molten polyurethane was melt-blown to form a random web as follows. The molten polyurethane was extruded from the slots on a die orifice heated at 260 °C. The fibrous molten polyurethane was made into fine fibers by an air jet of 260 °C and collected on a wire cloth moving at 2 m/min at a collection distance of 40 cm. The obtained melt-blown polyurethane nonwoven fabric B was composed of fine fibers of about 0.13 dtex and had an average mass per unit of 45 g/m$^2$, an average thickness of 1.8 mm and an apparent density of 0.25 g/cm$^3$.

PRODUCTION EXAMPLE 2

Production of woven fabric C

Polyester yarns (80 dtex/36 f) subjected to false twisting were further subjected to additional twisting by 600 turn/m and then woven at a weaving density of 82 yarns/inch (warp) x 76 yarns/inch (weft), to obtain a woven fabric C having a mass per unit area of 70 g/m$^2$, a thickness of 0.17 and an apparent density of 0.412 g/cm$^3$.

PRODUCTION EXAMPLE 3

Production of water-soluble, thermoplastic polyvinyl alcohol

A 100-L pressure reactor equipped with a stirrer, a nitrogen inlet, an ethylene inlet and an initiator inlet was charged with 29.0 kg of vinyl acetate and 31.0 kg of methanol. After raising the temperature to 60°C, the reaction system was purged with nitrogen by bubbling nitrogen for 30 min. Then, ethylene was introduced so as to adjust the pressure of the reactor to 5.9 kgf/cm$^2$. A 2.8 g/L methanol solution of 2,2'-azobis(4-methoxy-2,4-dimethylvaleronitrile) was purged with nitrogen by nitrogen gas bubbling. After adjusting the temperature of reactor to 60°C, 170 mL of the initiator solution was added to initiate the polymerization. During the polymerization, the pressure of reactor was maintained at 5.9 kgf/cm$^2$ by introducing ethylene, the polymerization temperature maintained at 60°C, and the initiator solution was continuously added at a rate of 610 mL/h. When the conversion of polymerization reached 70% after 10 h, the polymerization was terminated by cooling.

After releasing ethylene from the reactor, ethylene was completely removed by bubbling nitrogen gas. The non-reacted vinyl acetate monomer was removed under reduced pressure to obtain a methanol solution of polyvinyl acetate, which was then diluted to 50% concentration with methanol. To 200 g of the 50% methanol solution of polyvinyl acetate (100 g of polyvinyl acetate in the solution), 46.5 g of a 10% methanol solution of NaOH was added. The molar ratio of NaOH/vinyl acetate unit was 0.10. After about 2 min of the addition of the alkali solution, the system was related. The gel was crushed by a crusher and allowed to stand at 60°C for one hour to allow the saponification to further proceed. Then, 1000 g of methyl acetate was added. After confirming the completion of neutralization of the remaining alkali by phenolphthalein indicator, white solid (modified PVA) was separated by filtration. The white solid (modified PVA) was added with 1000 g of methanol and allowed to stand at room temperature for 3 h for washing. After repeating the above washing operation three times, the liquid was centrifugally removed and the solid remained was dried at 70°C for 2 days to obtain a dried modified PVA.

The saponification degree of the ethylene-modified PVA was 98.4 mol %. The modified PVA was incinerated and dissolved in an acid for analysis by atomic-absorption spectroscopy. The content of sodium was 0.03 part by mass based on 100 parts by mass of the modified PVA. After repeating three times the reprecipitation-dissolution operation in which n-hexane is added to the methanol solution of polyvinyl acetate obtained by removing the non-reacted vinyl acetate monomer after the polymerization to cause precipitation and acetone is then added for dissolution, the precipitate was vacuum-dried at 80 °C for 3 days to obtain a purified polyvinyl acetate. The polyvinyl acetate was dissolved in d6-DMSO and analyzed by 500 MHz H-NMR (JEOL GX-500) at 80 °C. The content of ethylene unit was 10 mol %.

The above methanol solution of polyvinyl acetate was added with a 10% methanol solution of NaOH. The molar ratio of NaOH/vinyl acetate unit was 0.5. The resultant gel was crushed and the saponification was allowed to further proceed by standing at 60 °C for 5 h. The saponification product was extracted by Soxhlet with methanol for 3 days and the obtained extract was vacuum-dried at 80 °C for 3 days to obtain a purified, ethylene-modified PVA. The average polymerization degree of the purified, modified PVA was 330 when measured by a method of JIS K6726. The content of 1,2-glycol linkage and the content of three consecutive hydroxyl groups in the purified, modified PVA were respectively 1.50 mol % and 83% when measured by 5000 MHz H-NMR (JEOL GX-500). A 5% aqueous solution of the purified, modified PVA was made into a cast film of 10 $\mu$m thick, which was then vacuum-dried at 80 °C for one day and then measured for the melting point in the manner described above. The melting point was 206 °C.

PRODUCTION EXAMPLE 4

Production of microfine fiber-forming fibers

The water-soluble, thermoplastic PVA (sea component) produced above and an isophthalic acid-modified polyethylene terephthalate (degree of modification of 8 mol %, island component) having a melting point of 234 °C and an intrinsic viscosity of 0.65 (measured at 30 °C in an equiamount mixed solution of phenol/tetrachloroethane) were extruded form a spinneret for melt composite spinning (0.25 mm $\phi$, 37 islands, 55 holes) at a spinning temperature of 260 °C in a sea component/island component ratio of 30/70 (by mass). The spun fibers were drawn in a roller plate manner under usual conditions. The spinning properties, continuous running properties and drawability were good and no problem was caused. The sea-island composite fibers were crimped and cut to staples of 51 mm long. The staples of sea-island composite fibers had a single fiber fineness of 4.13 dtex and good mechanical properties such as a strength of 3.2 cN/dtex and an elongation of 40%.

EXAMPLE 1

(1) Preparation of fiber web A'

The staples of sea-island composite fibers (microfine fiber-forming fibers) were made into a web through a carding step and a crosslapping step. The web was pre-entangled by a needle punching at a density of 40 punch/cm$^2$, to obtain a fibrous web A' made of microfine fiber-forming fibers which had a mass per unit area of 300 g/m$^2$, a thickness of 2.5 mm and an apparent density of 0.12 g/cm$^3$.

(2) Preparation of raised sheet

The fibrous web A', the polyurethane nonwoven fabric B and the plain woven fabric C were superposed in this order. The superposed body was needle-punched with single barb felt needles first from the side of the fibrous web A' at a punching density of 120 punch/cm$^2$ and then from the side of the plain woven fabric C at a punching density of 400 punch/cm$^2$ to convert the fibrous web A' to an entangled nonwoven fabric A" and simultaneously unite the entangled nonwoven fabric A", the polyurethane nonwoven fabric B and the plain woven fabric C, thereby obtaining a three-dimensionally entangled fibrous body having a mass per unit area of 430 g/m$^2$. The needle punching from the of the fibrous web A' was conducted such that the barbs of felt needles passed through the plain woven fabric C, and the needle punching from the side of the plain woven fabric C was conducted such that the barbs of felt needles did not come out on the surface of the fibrous web A'. The three-dimensionally entangled fibrous body thus obtained was heated in a hot air of 200 °C and pressed by a metal roll, to regulate the apparent density to 0.45 g/cm$^3$ (1.07 mm thick). Then, the three-dimensionally entangled fibrous body was impregnated with a 40% aqueous emulsion of polyether-type polyurethane (Evafanol AP-12 manufactured by Nicca Chemical Co., Ltd.) and the impregnated amount was adjusted to a pickup degree of 65% by squeezing with a mangle. Successively thereafter, the three-dimensionally entangled fibrous body was dried a pin tenter dryer at 150 °C for 7 min.

The polyurethane-impregnated, three-dimensionally entangled fibrous body was repeatedly immersed in a hot water of 90 °C and then squeezed to remove the sea component (water-soluble, thermoplastic PVA) and then dried in a pin tenter dryer at 140 °C for 5 min, thereby converting the entangled nonwoven fabric A" to an entangled nonwoven fabric A. After raising the surface of the entangled nonwoven fabric A by buffing with a sand paper, the three-dimensionally entangled fibrous body was dyed gray by a jet dyeing with a disperse dye at 130 °C for 1 h. The dyed three-dimensionally entangled fibrous body was dried in a pin tenter dryer at 140 °C for 5 min and finally the raised naps were ordered, to obtain a raised sheet having a thickness of 0.9 mm and a mass per unit area of 400 g/m$^2$. The thickness of each layer of the raised sheet was 0.63 mm for the entangled nonwoven fabric A, 0.1 mm for the polyurethane nonwoven fabric B, and 0.17 mm for the plain woven fabric C.

The obtained raised sheet was cross-sectionally observed under an electron microscope. The polyurethane nonwoven fabric B was melted to form a film. The microfine fibers of the entangled nonwoven fabric A which penetrated through the polyurethane nonwoven fabric B were partly bonded and fixed to polyurethane. The constant load elongation of the raised sheet was 2% in both MD and TD, and the residual strain was 1% or less in both MD and TD. The raised sheet had a rounded hand and a moderate elasticity. The seat portion of a vehicle seat completely covered using the raised sheet as the covering fabric. After sitting on the obtained seat continuously for 1 h, the surface of the seat portion was observed. Particular deformation and wrinkles which largely impaired the quality of covering fabric were not found. The abrasion loss of raised sheet after Martindale abrasion test was 3 mg or less and the change in appearance such as piling was not found.


EXAMPLE 2

Using the microfine fiber-forming fibers produced in Production Example 4, a fibrous web D' having a mass per unit area of 200g/m$^2$, a thickness of 2mm and an apparent density of 0.10g/cm$^3$ was prepared. Using the fibrous web D' together with the polyurethane nonwoven fabric B, the plain woven fabric C and the fibrous web A' each being obtained in Production Examples 1 and 2 and Example 1, a superposed body of fibrous web A'/polyurethane nonwoven fabric B/plain woven fabric C/fibrous web D' was obtained. Then, the superposed body was needle-punched with single barb felt needles first from the side of the fibrous web A' at a punching density of 800 punch/cm$^2$, next from the side of the fibrous web D' at a punching density of 600 punch/cm$^2$, and finally again from the side of the fibrous web A' at a punching density of 200 punch/cm$^2$. With such a needle punching, the fibrous web A' and the fibrous web D' were converted to an entangled nonwoven fabric A" and entangled nonwoven fabric D", respectively, and simultaneously, the entangled nonwoven fabric A", the polyurethane nonwoven fabric B, the plain woven fabric C and the entangled nonwoven fabric D" were united together, to obtain a three-dimensionally entangled fibrous body having a mass per unit area of 630 g/m$^2$. The needle punching from the side of the fibrous web A' and the needle punching from the side of the fibrous web D' were conducted such that the barbs of felt needles passed through the fibrous web D' and the fibrous web A', respectively. Thereafter, in the same manner as in Example 1, the apparent density was adjusted to 0.45 g/cm$^3$, polyurethane was impregnated, and the microfine fiber-forming fibers were converted to microfine fibers. Then, the obtained three-dimensionally entangled fibrous body was made into a double-raised sheet in the same manner as in Example 1 except for raising the surfaces of both the entangled nonwoven fabric A and the entangled nonwoven fabric D by buffing with a sand paper.

The obtained raised sheet was cross-sectionally observed under an electron microscope. The polyurethane nonwoven fabric B was melted to form a film. The microfine fibers of the entangled nonwoven fabric A and the entangled nonwoven fabric D which penetrated through the polyurethane nonwoven fabric B were partly bonded and fixed to polyurethane. The constant load elongation of the raised sheet was 2% in both MD and TD, and the residual strain was 1% or less in both MD and TD. The seat portion of a vehicle seat was completely covered using the raised sheet as the covering fabric with the entangled nonwoven fabric A or the entangled nonwoven fabric D being out. After sitting on the obtained seat continuously for 1 h, the surface of the seat portion was observed. In both the cases, particular deformation and wrinkles which largely impaired the quality of covering fabric were not found. The abrasion loss of raised sheet after Martindale abrasion test was 3 mg or less in both the sides of the entangled nonwoven fabric A and the entangled nonwoven fabric D, and the change in appearance such as piling was not found.

COMPARATIVE EXAMPLE 1

A raised sheet and a seat were produced in the same manner as, in Example 1 except for omitting the polyurethane nonwoven fabric B. The hand of the obtained raised sheet was not rounded. After sitting on the obtained seat continuously for 1 h, the covering fabric was deformed and took several minutes to restore to its original state. The abrasion loss of raised sheet after Martindale abrasion test was 5 mg and the pilling occurred.

COMPARATIVE EXAMPLE 2

A raised sheet and a were produced in the same manner as in Example 1 except for omitting the plain woven fabric C. The hand of the obtained raised sheet was good. However, after sitting on the obtained seat continuously for 1 h, the covering fabric was deformed and took 1 h or more to restore to its original state. The abrasion loss of raised sheet after Martindale abrasion test was 5 mg and the change in appearance such as piling was not found.

COMPARATIVE EXAMPLE 3

A raised sheet was produced in the same manner as in Example 1 except that the penetrated fibers are fixed at 110 °C for 2 min. After dyeing, the sheet was dried in a pin tenter dryer at 110 °C for 2 in, and finally the raised naps were ordered, to obtain the raised sheet. The obtained raised sheet was cross-sectionally observed under an electron microscope. The microfine fibers of the entangled nonwoven fabric A which penetrated through the polyurethane sheet B were not bonded to polyurethane.
The hand of the raised sheet was the same as that of the raised sheet obtained in Example 1. After sitting on the seat produced in the same manner as in Example 1 continuously for 1 h, particular deformation and wrinkles which largely impaired the quality of covering fabric were not found. However, the abrasion loss of raised sheet after Martindale abrasion test was 5 mg the pilling occurred.

INDUSTRIAL APPLICABILITY

The raised sheet of the present invention is excellent in the shape stability, for example, it does not lose its shape even after a long term use. In addition, the raised sheet has a good surface abrasion resistance and a soft and high-quality hand. With such excellent properties, the raised sheet is particularly useful as the covering fabric for vehicle seats such as railroad vehicle seat, automotive seat, airplane seat and ship seat and the covering fabric for interior furniture such as sofa, cushion and chair which are required to have a good shape stability. The raised sheet is also effectively used in other applications, for example, wide applications such as clothes, shoes, bags, pouches gloves.

**Claims**

1. A raised sheet comprising three layers which are united by entanglement, the raised sheet satisfying the following requirements:

   (1) three layers are united in a layered structure of entangled nonwoven fabric A made of microfine fibers/ polyurethane sheet B/woven or knitted fabric C or a layered structure of entangled nonwoven fabric A made of microfine fibers/woven or knitted fabric C/polyurethane sheet B;
   (2) the entangled nonwoven fabric A has raised microfine fibers on its surfaced
   (3) a part of the microfine fibers constituting the entangled nonwoven fabric A penetrates through the polyurethane sheet B and the woven or knitted fabric C in this order, or penetrates through the woven or knitted fabric C and the polyurethane sheet B in this order; and
   (4) at least a part of the penetrated microfine fibers bonds to polyurethane which constitutes the polyurethane sheet B.

2. The raised sheet according to claim 1, wherein an entangled nonwoven fabric D is further united by entanglement to an outer surface of the woven or knitted fabric C or the polyurethane sheet B which is disposed on an outermost surface of the layered structure, and a part of the microfine fibers constituting the entangled nonwoven fabric A penetrates through the polyurethane sheet B and the woven or knitted fabric C and is entangled with the fibers constituting entangled nonwoven fabric D.

3. The raised sheet according to claim 1, wherein an entangled nonwoven fabric D is further united by entanglement to an outer surface of the woven or knitted fabric C or the polyurethane sheet B which is disposed on an outermost surface of the layered structure; a part of the microfine fibers the entangled fabric A penetrates through the polyurethane sheet B the woven or knitted fabric C and is entangled with the fibers constituting the entangled nonwoven fabric D; and a part of the fibers constituting the entangled nonwoven fabric D penetrates through the polyurethane sheet B and the woven or knitted fabric C and is entangled with the microfine fibers constituting the entangled nonwoven fabric A.

4. The raised according to any one of claims 1 to 3, wherein the microfine fibers constituting the entangled nonwoven fabric A are produced by converting microfine fiber-forming fibers which comprises a water-soluble polymer and a sparingly water-soluble polymer to the microfine fibers.

5. A covering fabric for vehicle seats produced from the raised sheet as defined in any one of claims 1 to 3.

6. A method of producing a raised sheet, which comprises:

(1) a step of superposing a fiber web A' made of microfine fiber-forming fibers, a polyurethane sheet B and a woven or knitted fabric C, thereby obtaining a superposed body having a layered structure of fiber web A'/ polyurethane sheet B/woven or a layered structure of knitted fabric C or fiber web A/woven or knitted fabric C/ polyurethane sheet B;
(2) a step of entangling the superposed body such that at least a part of the microfine fiber-forming fibers penetrates through the polyurethane sheet B the woven or knitted fabric C, thereby converting the fiber web A' to an entangled nonwoven fabric A" to unite the superposed body;
(3) a step of converting the microfine fiber-forming fibers to microfine fibers, thereby converting the entangled nonwoven fabric A" to an entangled nonwoven fabric A; and
(4) a step of bonding at least a part of the microfine fibers penetrating through the polyurethane sheet B to polyurethane which constitutes the polyurethane sheet B by heat treatment, and then, forming raised microfine fibers on a surface of the entangled nonwoven fabric A; or
(5) a step of forming raised microfine fibers on a surface of the entangled nonwoven fabric A, and then, bonding at least a part of the microfine fibers penetrating through the polyurethane sheet B to polyurethane which constitutes the polyurethane sheet B by treatment.

## INTERNATIONAL SEARCH REPORT

| | International application No. |
|---|---|
| | PCT/JP2006/311922 |

A. CLASSIFICATION OF SUBJECT MATTER
*D06N3/14(2006.01)i*

According to International Patent Classification (IPC) or to both national classification and IPC

B. FIELDS SEARCHED

Minimum documentation searched (classification system followed by classification symbols)
D06N3/14

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-303367 A (Toray Industries, Inc.), 31 October, 2000 (31.10.00), Full text (Family: none) | 1-6 |
| A | JP 6-182913 A (Toray Industries, Inc.), 05 July, 1994 (05.07.94), Full text (Family: none) | 1-6 |
| A | JP 6-114981 A (Toray Industries, Inc.), 26 April, 1994 (26.04.94), Full text (Family: none) | 1-6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 September, 2006 (11.09.06) | 19 September, 2006 (19.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/311922

C (Continuation).   DOCUMENTS CONSIDERED TO BE RELEVANT

| Category* | Citation of document, with indication, where appropriate, of the relevant passages | Relevant to claim No. |
|---|---|---|
| A | JP 5-186972 A  (Kanebo, Ltd.),<br>27 July, 1993 (27.07.93),<br>Full text<br>(Family: none) | 1-6 |
| A | JP 5-186971 A  (Kanebo, Ltd.),<br>27 July, 1993 (27.07.93),<br>Full text<br>(Family: none) | 1-6 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4001113 B
- JP 4257363 A
- JP 7070902 A